# EUROPÄISCHE PATENTSCHRIFT

(11) **EP 2 596 866 B1**
(45) Veröffentlichungstag und Bekanntmachung des Hinweises auf die Patenterteilung: **23.07.2014**
(21) Anmeldenummer: 12193323.8
(22) Anmeldetag: 20.11.2012
(51) Int. Cl.: B01J 39/20, B01J 49/00, C02F 1/42

(54) **Dampfreinigung schwach saurer Kationenaustauscherharze**
Steam cleaning of weakly acidic cation exchange resins
Nettoyage à vapeur des résines échangeuses de cations faiblement acides

(30) Priorität: 24.11.2011 EP 11190451
(43) Veröffentlichungstag der Anmeldung: 29.05.2013
(73) Patentinhaber: LANXESS Deutschland GmbH, 50569 Köln (DE)
(72) Erfinder: Zarges, Wolfgang, 51069 Köln (DE); Wambach, Wolfgang, 51065 Köln (DE); Vanhoorne, Pierre, 40789 Monheim (DE); Klipper, Reinhold, 50933 Köln (DE); Schelhaas, Michael, 50733 Köln (DE)

(56) Entgegenhaltungen:
- DE-T2- 60 209 309
- GB-A- 1 261 074
- JP-A- H0 655 079
- US-A- 5 858 119

## Beschreibung

Diese Erfindung bezieht sich auf ein verbessertes Verfahren zur Herstellung von schwach sauren Kationenaustauscherharzen, insbesondere das Reinigen von schwach sauren Kationenaustauscherharzen, welche von vernetztem Poly(acrylnitril) abgeleitet sind sowie die Verwendung von Dampf zur Reduktion des Leachings schwachsauerer Kationenaustauscher.

Schwach saure Kationenaustauscherharze haben großen Nutzen bei der Entfernung von Erdalkaliionen, insbesondere Calcium und Magnesium, und einigen Metallen, insbesondere Blei, Quecksilber, Kupfer, Zink, aus Trinkwasser gezeigt. Die hohe lonenaustauchkapazität und Austauschselektivität von schwach sauren Kationenaustauscherharzen sind ideale Eigenschaften in dieser Anwendung. Als solche hat die Kombination von schwach sauren Kationenaustauscherharzen mit Aktivkohle in Mischbettsystemen eine breite Verwendung in Trinkwasseraufbereitungsanwendungen, wie Wasserkrugfilteranwendungen für Trinkwasser, gefunden. Es ist wünschenswert, dass die schwach sauren Kationenaustauscherharze keine extrahierbaren Materialien aus dem Harz in das behandelte Wasser freisetzen. Diese extrahierbaren Materialien sind gewöhnlich Nebenprodukte aus dem Ionenaustauscher-Herstellungsverfahren.

Somit ist das Reinigen von schwach sauren Kationenaustauscherharzen zum Entfernen von extrahierbaren Stoffen, insbesondere unvernetzten Polymerketten, Initiatorresten und anderen Verunreinigungen, bei vielen Endanwendungen von einer akzeptablen Leistung abhängig. Ohne genaues Reinigen können die Harze Materialien in das zu behandelnde Wasser freisetzen, was zu Aufschäumen, Farbveränderungen, Geruch, hohen TOC-Werten (Werte des gesamten organischen Kohlenstoffs) und anderen unerwünschten Effekten führt. Das Phänomen wird in der Fachwelt als "Leaching", die freigesetzten Materialien als "Leachables" bezeichnet. Der Begriff "Leaching" kommt aus dem Anglikanischen und bedeutet wörtlich übersetzt "Auslaugung/ Elution". Man unterscheidet anfängliches (initial) und dauerhaftes (continuous) Leaching: Anfängliche Leachables sind organische Stoffe, die von neuen Harzen nach der Vorbehandlung freigesetzt werden und die aus Restprodukten des Herstellungsprozesses bestehen. Hierbei kann es sich um Monomere, Oligomere, Polymere, Nebenprodukte und auch um Produktionshilfsmittel handeln. Das anfängliche Leaching hält nicht lange an, eben nur solange, bis die Restprodukte aus dem Harz gespült wurden. Ein einmal eingeleiteter dauerhafter Leachprozess kann unter extremen Bedingungen bis zur beginnenden Reduzierung der Kapazität und einer Zerstörung des Harzes ablaufen. Der Übergang zum kontinuierlichen Leaching ist mit einem Angriff auf die Struktur der Matrix verbunden. Dauerhafte Leachables sind Zersetzungserzeugnisse der Austauscher, die in jedem Korn kontinuierlich erzeugt werden. Sie bestehen aus Kettenfragmenten unterschiedlicher Menge und Länge. (Diplomarbeit, R.G. Lamberz, FH Aachen, 2001).

Schwach saure Kationenaustauscherharze werden gewöhnlich durch Suspensionspolymerisation von hydrolysierbaren Acrylmonomeren, bevorzugt von Acrylnitril, Methylacrylat oder anderen Acrylatestern, mit einem geeigneten Vernetzungsmonomer, bevorzugt Divinylbenzol (DVB), Trivinylcyclohexan (TVCH), 1,7-Octadien oder Diethylenglykoldivinylether, hergestellt. Diese vernetzten Copolymere werden dann entweder unter sauren oder unter basischen Bedingungen hydrolysiert, wodurch die entsprechenden Polycarbonsäureprodukte erhalten werden.

Sowohl säurekatalysierte als auch basenkatalysierte Hydrolysen von vernetztem Poly(acrylnitril)-Perlpolymer stellen Probleme dar, die bei dem Herstellungsverfahren von schwach sauren Kationenaustauscherharzen angesprochen werden müssen. Eine Säurehydrolyse, insbesondere durch Schwefelsäure, verläuft gewöhnlich mit starker Wärmeentwicklung, was die Hydrolyse im Industriemaßstab schwer kontrollierbar macht. Außerdem werden während der Hydrolyse große Mengen an Abfallschwefelsäure erzeugt. Darüber hinaus wird die Abfallschwefelsäure aufgrund der Zwischenneutralisation von Ammoniak während der Hydrolyse durch Salze, insbesondere Ammoniumsulfat, verunreinigt, wodurch sich weiterer zeitraubender Aufwand für die Verarbeitung von Materialien zur Entsorgung oder Wiederverwendung ergibt.

Die alkalische (basische) Hydrolyse wird gewöhnlich durch Inkontaktbringen des vernetzten Poly(acrylnitril)-Perlpolymers mit einer wässrigen, alkoholischen oder gemischten wässrigalkoholischen Alkalimetallhydroxidlösung bei erhöhten Temperaturen unter Rückfluss oder in geschlossenen Druckgefäßen (Autoklaven) bis zur vollständigen Hydrolyse durchgeführt. Die Ammoniakerzeugung führt zu ähnlichen Sicherheitsbelangen, wie sie für die Säurehydrolysereaktion besprochen wurden, nämlich einer starken Wärmeentwicklung sowie der sporadischen Erzeugung von gasförmigem Ammoniak während der Hydrolyse.

Auf ähnliche Weise erzeugen säurekatalysierte und basenkatalysierte Hydrolysen von vernetzten Poly(alkylacrylat)-Materialien bei dem Herstellungsverfahren von schwach sauren Kationenaustauscherharzen Abfallströme und Nebenproduktverunreinigungen, insbesondere flüchtige (C₁-C₄)-Alkohole und die entsprechenden Etherverbindungen, die aus der Kondensation der Alkohole resultieren.

Zusätzlich zu den oben genannten Sicherheits- und Umweltbelangen, die das Herstellungsverfahren einschließt, müssen die erhaltenen schwach sauren Kationenaustauscherharz-Zwischenprodukte umfangreich gereinigt werden, um die beim Herstellungsverfahren erzeugten Nebenprodukte zu entfernen. Solche Reinigungsschritte sollen die Qualität von schwach sauren Kationenaustauscherharzmaterialien, die in Aufbereitungssystemen für Trinkwasseranwendungen verwendet werden, gewährleisten. Bisherige Bemühungen (US-Patente Nr. 3 544 488 und 3 687 912) zum Minimieren der Menge an Nebenprodukten in hydrolysierten Poly(acrylnitril)-Harzen umfassen die Verwendung ausgewählter Hilfsvernetzungsmittel (zusätzlich zu DVB). US-Patent Nr. 5,175,193 offenbart die alkalische Hydrolyse von vernetztem Poly(acrylnitril), wobei das alkalische Hydrolysierungsmittel und das vernetzte Poly(acrylnitril) nur bei erhöhten Temperaturen zusammengebracht werden, d.h. bei mehr als 105 °C. Die nach obiger Beschreibung behandelten Harze erfordern jedoch vor ihrer Verwendung in typischen Trinkwasseranwendungen weiterhin eine umfangreiche Reinigung.

In der DE 60209309T2 wird ein Verfahren zur Behandlung eines SSK (schwach sauren Kationenaustauschers) in der Wasserstoffform mit Dampf beschrieben, das die Aufnahmefähigkeit des SSK für im Wasser befindliche Trihalomethane erhöht. Die großen Dampfmenge von 1 bis 15 kg Dampf pro kg SSK und die langen Behandlungszeiten des SSK stellen jedoch einen wirtschaftlichen Nachteil dar. Eine Reduzierung der TOC-Abgabe des SSK wird nicht gezeigt.

Das erfindungsgemäße Verfahren behebt die Mängel bisheriger Verfahren zum Verringern der Menge an aus dem Herstellungsverfahren resultierenden Verunreinigungen schwach saurer Kationenaustauscherharze in ihrer endgültigen Form und reduziert damit die TOC-Abgabe der erfindungsgemäß behandelten Harze.

Die vorliegende Erfindung stellt ein Verfahren zum Reinigen von schwach sauren Kationenaustauscherharzen gemäß den Ansprüchen 1 bis 9 bereit.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

Im Rahmen der vorliegenden Erfindung wurde ein verbessertes Verfahren zum wirkungsvollen Entfernen von schwach sauren Kationenaustauscherharz-Zwischenprodukten gefunden, das zu schwach sauren Kationenaustauscherharzen führt, die für eine verbesserte Leistung von Wasseraufbereitungssystemen sorgen. Das erfindungsgemäße Verfahren ist für schwach saure Kationenaustauscherharze anwendbar, die entweder durch Säure- oder Basenhydrolysen von vernetzten Polycarboxylatharzpräkursoren abgeleitet sind.

Die erfindungsgemäß anzuwendende Dampfbehandlung an einem vorgegebenen Punkt beim Verarbeiten eines schwach sauren Kationenaustauscherharzes ist für den Erhalt eines schwach sauren Kationenaustauscherharzes, welches als eine Komponente in Trinkwasseraufbreitungssystemen, wie als Patronenkrugsysteme, einsetzbar ist, kritisch.

Wie hierin verwendet, sind die folgenden Begriffe durch die entsprechenden Definitionen gekennzeichnet, außer es ist im Kontext anders angegeben. Der Begriff "vernetzter Polycarboxylatharzpräkursor" bezieht sich auf ein Polymer, das ein schwach saures Kationenaustauscherharz entweder durch direkte Copolymerisation von Acrylsäure- oder Methacrylsäuremonomeren mit Vernetzungsmonomeren oder durch Copolymerisation von Säurepräkursormonomeren, bevorzugt Acrylnitril oder (C₁-C₄)Alkylacrylaten, die anschließend zu Carbonsäuregruppen hydrolysierbar sind, bereitstellen kann. Der Begriff "Copolymer" bezieht sich auf Polymerzusammensetzungen, die Einheiten von zwei oder mehr unterschiedlichen Monomeren, einschließlich Stellungsisomeren, enthalten.

Folgende Abkürzungen werden hierin verwendet:
SSK = schwach saures Kationenaustauscherharz;
g = Gramm;
kg = Kilogramm;
1= Liter;
ml = Milliliter;
cm = Zentimeter;
ppb = Teile je Milliarde, bezogen auf das Gewicht/Volumen;
Druck ist kilo-Pascal (kPa).

Wenn nicht anders angegeben, gelten die aufgeführten Bereiche als inklusive und kombinierbar; Temperaturen sind in Grad Celsius (°C) angegeben, und Referenzen in Bezug auf Prozentangaben (%) sind Gewichtsprozente.

Das erfindungsgemäße Verfahren ist zur Behandlung von SSK nützlich, das oder die durch verschiedene Herstellungsverfahren erzeugt wird bzw. werden. Geeignete schwach saure Kationenaustauscherharze umfassen bevorzugt jene, die von vernetzter Poly(acrylsäure), vernetzter Poly(methacrylsäure), hydrolysiertem, vernetztem Poly((C₁-C₄)Alkylacrylat) und hydrolysiertem, vernetztem Poly(acrylnitril) abgeleitet sind; es wird davon ausgegangen, dass diese Polymere Copolymere sein können, umfassend eine oder mehrere Acrylsäure-, Methacrylsäure-, (C₁-C₄)Alkylacrylat- und Acrylnitrilmonomereinheiten in polymerisierter Form. Geeignete Vernetzungsmittel, die bei der Herstellung der obengenannten vernetzten Polymere nützlich sind, umfassen bevorzugt aromatische Polyvinylverbindungen, insbesondere Divinylbenzol, Trivinylbenzol, Divinyltoluol, Divinylpyridin, Divinylnaphthalin oder Divinylxylol, und nichtaromatische Vernetzungsmonomere, insbesondere Ethylenglykoldiacrylat, Ethylenglykoldimethacrylat, Trimethylolpropantriacrylat, Trimethylolpropantrimethacrylat, Diethylenglykoldivinylether, 1,5-Hexadien, 2,5-Dimethyl-1 ,5-hexadien, 1,7-Octadien, Trivinylcyclohexan oder Triallylisocyanurat. Vorzugsweise werden die Vernetzungsmittel aus einer oder mehreren von Divinylbenzol (DVB), Trivinylcyclohexan (TVCH), 1,7-Octadien und Diethylenglykoldivinylether ausgewählt, insbesondere bevorzugt werden DVB und 1,7-Octadien eingesetzt Gewöhnlich enthält der vernetzte Polycarboxylatharzpräkursor 0,5 bis 40 %, vorzugsweise 1 bis 25 %, besonders bevorzugt 2 bis 20 % und ganz besonders bevorzugt 3 bis 15 % Vernetzungsmittel, bezogen auf das Gewicht des Vernetzungsmittels in dem Polycarboxylatharzpräkursor vor der Hydrolyse zur Carboxylatform. Beispielsweise würden vernetzte Poly(methyl-acrylat)- oder vernetzte Poly(acrylnitril)-Präkursoren einer Säure- oder Basenhydrolyse unterzogen werden, um die entsprechenden vernetzten schwach sauren Poly(acrylsäure)-Kationenaustauscherharze zu erhalten.

Obwohl ausführliche Beschreibungen der Hydrolyse von vernetzten Poly(acrylnitril)- oder Poly(acrylat)-Substraten zum Bereitstellen der entsprechenden schwach sauren Kationenaustauscherharze zur Verfügung stehen, ist nur vereinzelt Aufmerksamkeit auf die Waschbedingungen nach der Hydrolyse und kurz vor Bereitstellen des SSK-Harzes in seiner Endform gerichtet worden. Beispielsweise sind Nachhydrolysebehandlungen typischerweise durch Waschen des alkalisch hydrolysierten, vernetzten Poly(acrylnitril)-Zwischenprodukts, Umwandlung in eine Wasserstoffform mit überschüssiger Säure und Waschen bis zur Neutralisierung gekennzeichnet (US-Patente Nr. 3,544,488, 3,687,912 und 5,175,193). In ähnlicher Weise ist die Nachhydrolysebehandlung von alkalisch hydrolysierten, vernetzten Poly(acrylat)-Zwischenprodukten durch Waschen mit 1 normaler Salzsäure (US-Patent Nr. 4,614,751) gekennzeichnet.

Bei dem erfindungsgemäßen Verfahren wird mit einem SSK begonnen, welches im Wesentlichen in neutralisierter Salzform vorliegt, das heißt, ein SSK worin mindestens etwa 90 % der Carbonsäurefunktionalität in Salzform vorliegen. Geeignete neutralisierte Salzformen umfassen bevorzugt Natrium-, Kalium-, Lithium- oder Ammoniumsalze. Besonders bevorzugt wird das SSK in Natriumform bereitgestellt. Das SSK in neutralisierter Salzform kann direkt von der alkalischen Hydrolysereaktion eines vernetzten Polycarboxylatharzpräkursors, durch Umwandlung des SSK aus der Wasserstoffform (wie von der Säurehydrolyse eines vernetzten Polycarboxylatharzpräkursors) in die neutralisierte Salzform durch herkömmliche Regenerierverfahren (siehe unten), oder durch eine herkömmliche Regenerierung von irgendeinem verfügbaren SSK in der Wasserstoffform in die neutralisierte Salzform bereitgestellt werden. Das SSK in neutralisierter Salzform kann in die Wasserstoffform umgewandelt werden (wie unten beschrieben) oder gegebenenfalls vor der Umwandlung zuerst in die Wasserstoffform rückgespült werden, oder ferner mit zusätzlichem Wasser, bevorzugt mit Wasser der Umgebungstemperatur bis etwa 90 °C, gewaschen werden. Besonders bevorzugt wird das SSK in neutralisierter Salzform vor der Umwandlung in die Wasserstofform bei 60 bis 90 °C mit Wasser gewaschen (Rückstrom oder Abwärtsstrom).

Das saure Regenerierungsmittel, welches bei der Umwandlung des SSK in neutralisierter Salzform in das SSK in der Wasserstoffform nützlich ist, ist bevorzugt eine starke Säure, besonders bevorzugt eine Mineralsäure, ganz besonders bevorzugt eine Säure der Reihe Schwefelsäure, Salzsäure, Phosphorsäure oder Salpetersäure. Insbesondere bevorzugt wird das saure Regenerierungsmittel aus einem oder mehreren von Schwefelsäure und Salzsäure ausgewählt. Gewöhnlich wird die Regenerierung durch Inkontaktbringen (Abwärtsstrom- oder Aufwärtsstromsäulenbehandlung) des SSK mit einem Überschuss an saurem Regenerierungsmittel, bevorzugt von 2 bis 4 Mol-Equivalenten an saurem Regenerierungsmittel je SSK-Equivalent, durchgeführt. Die saure Regenerierungsmittellösung ist gewöhnlich eine verdünnte wässrige Lösung der Säure, die bevorzugt 0,5 bis 20 % Säure, besonders bevorzugt 1 bis 15 % Säure und ganz besonders bevorzugt 2 bis 10 % Säure, bezogen auf das Gewicht der wässrigen Lösung, enthält.

Alternativ kann das SSK in neutralisierter Salzform durch Regenerierung mit einer schwachen Säure mit einem pK zwischen 3 und 7, vorzugsweise zwischen 4 und 7 und besonders bevorzugt zwischen 4 und 6,5 (Endwerte jeweils eingeschlossen) in das SSK in Wasserstoffform umgewandelt werden. Geeignete schwach saure Regenerierungsmittel umfassen bevorzugt Kohlensäure und Carbonsäuren, besonders bevorzugt Essigsäure, Zitronensäure, Maleinsäure, Milchsäure oder Gemische davon. Bei Verwendung wird das schwach saure Regenerierungsmittel vorzugsweise aus einer oder mehreren von Zitronensäure und Kohlensäure ausgewählt.

Eine typische Regenerierung (Umwandlung von der Wasserstoffform- in die Natriumformvariante und umgekehrt) des SSK umfasst die Behandlung mit den geeigneten Reagenzien, gewöhnlich bei Temperaturen von Umgebungstemperatur (Raumtemperatur) bis etwa 90 °C, bei Fließgeschwindigkeiten von etwa 1 Bettvolumen (BV), gewöhnlich bis 10 BV, des Regenerierungsmittels pro Stunde. Beispielsweise würde die Umwandlung eines SSK aus der Wasserstoffform in die Natriumform und zurück in die Wasserstoffform gewöhnlich die folgende Abfolge umfassen: vier Bettvolumen einer 7%igen wässrigen Natriumhydroxidlösung, zwei Bettvolumen Wasser, vier Bettvolumen einer 7%igen wässrigen Salzsäurelösung und zwei Bettvolumen Wasser.

Das Harz in Wasserstoffform wird dann über mindestens 1 Stunde, bevorzugt 1 bis 10 Stunden, besonders bevorzugt 1 bis 5 Stunden und ganz besonders bevorzugt 2 bis 4 Stunden bei einer Harzbettemperatur von 100 bis 180 °C, vorzugsweise von 110 bis 150 °C und besonders bevorzugt von 120 bis 140 °C, mit Dampf behandelt, wodurch ein SSK erhalten wird, das zur Verwendung in Trinkwasseraufbereitungssystemen nützlich ist.

Es wurde überraschend gefunden, dass der Reinigungseffekt und somit die Absenkung der TOC-Abgabe des SSK bereits durch Einsatz von wesentlich geringeren Dampfmengen eintritt, als in der DE 60209309T2 beschrieben. Besonders überraschend ist, dass durch den Einsatz von geringeren Dampfmengen als in der DE 60209309T2 angegeben ein reineres Harz erhalten wird, das an das Trinkwasser weniger TOC abgibt, als von einem Harz das nach dem Stand der Technik behandelt wurde. Erfindungsgemäß werden im Verfahren der vorliegenden Erfindung 0,1 bis 0,9 kg, vorzugsweise 0,3 bis 0,9 kg und besonders bevorzugt 0,5 bis 0,9 kg Dampf pro kg SSK verwendet. Die Dampfbehandlung kann bequem durch Einspeisen von Druckdampf in ein SSK-Bett oder durch Außenbeheizung einer Waschsäule, die das zu behandelnde SSK enthält, durchgeführt werden. Erfindungsgemäß wird das Einspeisen von Druckdampf bei einem Druck von 100 bis 7000 kPa (15 bis 1000 Pfund pro Quadratzoll Messdruck, psig), vorzugsweise 170 bis 3500 kPa (25 bis 500 psig) und besonders bevorzugt 240 bis 700 kPa (35 bis 100 psig) durchgeführt. Die Dampfbehandlung kann durch Inkontaktbringen des SSK in der Wasserstoffform mit Dampf im Aufwärtsstrom, im Abwärtsstrom (gewöhnlich in Säulen) oder im Batch-Betrieb (wie in einem Druckkessel) durchgeführt werden. Gewöhnlich wird das SSK in der Wasserstoffform durch Abtropfenlassen des mit Dampf behandelten Harzes, bis dieses frei von Restoberflächenwasser ist, gefolgt von der Entnahme, isoliert.

Wenn die Dampfbehandlung bei einer Temperatur von weniger als etwa 100 °C durchgeführt wird oder die Kontaktzeit der Behandlung weniger als etwa 1 Stunde beträgt, weist das fertige Harz eine ungenügende Qualität auf. Wenn beispielsweise nur eine Heißwasserspülung mit einer Temperatur von 80 bis 90 °C zum Behandeln des SSK in Wasserstoffform verwendet wird, enthält das SSK unerwünschte extrahierbare Reststoffe, die dem behandelten Harz unerwünschten Geruch verleihen.

Nach der Dampfbehandlung und vor der Endentnahme des SSK kann das erfindungsgemäß bereits behandelte SSK gegebenenfalls zusätzlichen Behandlungen unterzogen werden. Bevorzugt wird das erfindungsgemäß mit Dampf behandelte SSK zusätzlich einer Endwäsche mit verdünnter Säure zum Entfernen geringer Mengen basischer Schmutzstoffe aus dem Verarbeitungsschritt unterzogen, umfassend das Inkontaktbringen des SSK in Wasserstoffform im Abwärtsflussbetrieb mit 2 bis 5 Bettvolumen an verdünnter Säure, bevorzugt wässriger Lösungen von 0,05 bis 1 N Schwefelsäure, Salzsäure, Phosphorsäure oder Salpetersäure, und dann das Spülen des SSK in der Wasserstoffform mit Wasser vor der Endentnahme. Vorzugsweise umfasst die optionale Säurewäsche die Verwendung von 1 normaler Schwefelsäure.

Andere optionale Behandlungen vor der Endentnahme des fertigen SSK umfassen bevorzugt das Rückspülen zum Entfernen von Feinstoffen (kleinen Harzteilchenschmutzstoffen) und einer Behandlung zum Minimieren des mikrobiellen Wachstums in dem fertigen Harz. Beispielsweise kann mit Dampf behandeltes SSK einer antimikrobiellen Behandlung unterzogen werden, umfassend das Inkontaktbringen des SSK in Wasserstoffform mit 0,4 bis 5 g, vorzugsweise 0,5 bis 3 g und besonders bevorzugt 0,7 bis 2 g antimikrobieller Mittel pro kg des SSK in Wasserstoffform vor der Endentnahme. Die in einer bevorzugten Ausführungsform durchzuführende antimikrobielle Behandlung umfasst die Verwendung eines antimikrobiellen Mittels, ausgewählt aus einem oder mehreren aus der Gruppe der Peroxide, (C₂-C₃)-Alkohole oder der anorganischen Chloridsalze. Geeignete Peroxide umfassen bevorzugt Wasserstoffperoxid oder Peressigsäure. Bevorzugt einzusetzende Alkohole sind Ethanol und Isopropanol. Bevorzugt einzusetzende anorganische Chloridsalze sind Natriumchlorid und Kaliumchlorid. Vorzugsweise beträgt bei Verwendung von Peroxiden die verwendete Menge bei der antimikrobiellen Behandlung 0,5 bis 1,5 g Peroxid pro kg SSK.

### Beispiele

Alle Verhältnisse, Teile und Prozentsätze sind, wenn nicht anders angegeben, auf das Gewicht bezogen angegeben, und alle verwendeten Reagenzien weisen, wenn nicht anders angegeben, eine gute Handelsqualität auf. Die in den Beispielen und Tabellen verwendeten Abkürzungen sind unten aufgeführt:
BV -- Bettvolumen (Volumen des Ionenaustauscherharzbetts, einschließlich Porenwasser)
SSK -- schwach saures Kationenaustauscherharz
mEq/g -- Milliequivalente pro Gramm
mEq/ml -- Milliequivalente pro Milliliter

Als Harz wurde ein SSK verwendet, das durch alkalische Hydrolyse eines (Acrylnitril-DVB-1,7-Octadien)-Copolymerisats gefolgt von einer Umwandlung in die Wasserstoffform durch Umladung mit Schwefelsäure bereitgestellt wurde. Es wies eine Feuchtigkeitshaltekapazität von 50 % und eine Kationenaustauschkapazität von 10,5 mEq/g (4,2 mEq/ml) auf.

### Beispiel 1 (nicht erfindungsgemäß)

Das SSK in Wasserstoffform wurde gemäß dem Stand der Technik bei 148 °C unter Verwendung von 2,5 kg Dampf pro kg Harz mit Dampf behandelt. Das mit Dampf behandelte Harz wurde dann etwa 2 Stunden mit deionisiertem Wasser rückgespült, bis es frei von sichtbaren feinen Teilchen war, und schließlich etwa 2 Stunden unter Verwendung von 6 Liter deionisiertem Wasser pro kg Harz im Abwärtsstrom gewaschen.

### Beispiel 2 (erfindungsgemäß)

Das SSK in Wasserstoffform wurde erfindungsgemäß bei 148 °C unter Verwendung von 0,9 kg Dampf pro kg Harz mit Dampf behandelt. Das mit Dampf behandelte Harz wurde dann etwa 2 Stunden mit deionisiertem Wasser rückgespült, bis es frei von sichtbaren feinen Teilchen war, und schließlich etwa 2 Stunden unter Verwendung von 6 Liter deionisiertem Wasser pro kg Harz im Abwärtsstrom gewaschen.

### Beispiel 3

Die Wirksamkeit des erfindungsgemäßen Reinigungsverfahrens wurde durch Messung der TOC-Abgabe des SSK an das Trinkwasser (als Maß für die Menge an im Harz verbleibenden Verunreinigungen) überprüft.

Die Ergebnisse sind in Tabelle 1 angeführt.

**Tabelle 1**

| **TOC** **(mg / l)** | **Beispiel 1** **(gemäß** DE 60209309T2**)** | **Beispiel 2** **(erfindungsgemäß)** |
|---|---|---|
| Standtest | 10,20 | 6,47 |
| Gelbfärbungstest | 13,90 | 11,49 |
| Leaching Test kalt | 6,54 | 4,21 |
| Leaching Test heiß | 16,96 | 13,45 |

Man erkennt, dass mit dem erfindungsgemäßen Verfahren die TOC-Abgabe des Harzes an das Trinkwasser um bis zu 36 % gesenkt wurde, obwohl Dampfmenge um mehr als einen Faktor 2 im Vergleich mit dem Stand der Technik reduziert wurden.

### Messmethoden

Wenn nicht anders spezifiziert ist deionisiertes Wasser im Sinne der vorliegenden Erfindung gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

### Standtest

Es werden 50 mL Harz eingerüttelt und mittels 200 mL deionisiertem Wasser in eine 250 mL Glasflasche überführt. Die Probe wird 5 Tage lang stehen gelassen und 1 x täglich kurz aufgeschüttelt. Von dem überstehenden Eluat wird nach 5 Tagen der TOC-Gehalt bestimmt.

### Gelbfärbungstest

Es werden 50 mL Harz auf einem Vibrationstisch eingerüttelt und in eine 250 mL Glasflasche überführt. Das Wasser wird mittels Absaugstab und Vakuum abgesaugt (Der Absaugstab ist ein Kunststoffrohr, welches an der einen Öffnung mit einem feinmaschigen Gewebe, ca. 1 µm Maschenweite, verschlossen ist). Die Harzprobe wird mit 200 mL deionisiertem (Leitfähigkeit < 1µS/cm, TOC < 300 ppb)Wasser gewaschen und wieder trocken gesaugt. Dieser Vorgang wird insgesamt 3 mal durchgeführt.
Nach dem letzten Absaugen des Wassers werden 150 mL deionisiertes Wasser (Leitfähigkeit < 1µS/cm, TOC < 300 ppb) in die Glasflasche gefüllt. Die Flasche wird verschlossen und 24 Stunden in das Blockheizgerät bei 80 °C gestellt.
Nach der Heizperiode wird von dem überstehenden Eluat der TOC-Gehalt bestimmt.

### Leaching Test kalt

85 mL Harz werden trocken in einem PE-Probenbecher (PE = Polyethylen) abgemessen und mit einem Löffelspatel glatt gestrichen. Mit 250 mL UPW-Wasser (UPW = Ultr Pure Water mit einem spezifischen Widerstand > 18 MΩ.cm, TOC < 5 ppb) wird die Probe in eine 500 mL Glasflasche überführt und verschlossen. Die Flasche wird auf einem Schütteltisch 1 Stunde bei 120 U/min. vertikal geschüttelt. Anschließend wird das Eluat über einen Membranfilter abgesaugt und der TOC-Gehalt vermessen.

### Leaching Test heiß

85 mL Harz werden trocken in einem PE-Probenbecher abgemessen und mit einem Löffelspatel glatt gestrichen. Mit 150 mL UPW-Wasser (spezifischer Widerstand > 18 MΩ.cm, TOC < 5 ppb) wird die Probe in einen 500 mL Erlenmeyerkolben überführt und 10 sek. geschwenkt. Das Wasser wird mit einem Membranfilter abgesaugt und verworfen. Dieser Vorgang wird insgesamt 3 mal ausgeführt. Anschließend werden 250 mL UPW-Wasser zu dem Harz gegeben und der Erlenmeyerkolben mit einem Uhrglas abgedeckt. Der Kolben wird für einen Zeitraum von 24 Stunden bei 80°C im Trockenschrank gestellt. Nach der Standzeit wird das Eluat über eine Stahlfritte abgesaugt und vor der Vermessung auf Raumtemperatur abgekühlt. Von dem Eluat wird der TOC-Gehalt bestimmt.

### TOC Bestimmung

Der TOC ist ein Summenparameter und gibt den gesamten organisch gebundenen Kohlenstoff in wässrigen Medien in mg/l (ppm) an. Es wird mittels katalytischem Aufschluss in einem Messgerät Multi N/C 3000 der Firma Analytik Jena bestimmt.

## Patentansprüche

1. Verfahren zum Reinigen von schwach sauren Kationenaustauscherharzen, die entweder durch Säure- oder Basenhydrolysen von vernetzten Polycarboxylatharzpräkursoren abgeleitet sind, umfassend:
(a) das Umwandeln eines schwach sauren Kationenaustauscherharzes, das entweder durch Säure- oder Basenhydrolysen von vernetzten Polycarboxylatharzpräkursoren abgeleitet ist, worin mindestens etwa 90 % der Carbonsäurefunktionalität des schwach sauren Kationenaustauscherharzes in Salzform vorliegen, in ein schwach saures Kationenaustauscherharz in der Wasserstoffform durch Regenerieren mit einem sauren Regenerierungsmittel, und
(b) das Inkontaktbringen des schwach sauren Kationenaustauscherharzes in Wasserstoffform mit 0,1 bis 0,9 Kilogramm an Dampf pro Kilogramm an schwach saurem Kationenaustauscherharz in Wasserstoffform bei einer Harzbetttemperatur von 100 bis 180°C und einem Druckdampf von 100 bis 7000 kPa für eine Zeitdauer von mindestens einer Stunde.

2. Verfahren nach Anspruch 1, wobei das schwach saure Kationenaustauscherharz aus einem oder mehreren Copolymeren von vernetzter Poly(acrylsäure), vernetzter Poly(methacrylsäure), hydrolysiertem, vernetztem Poly((C₁-C₄)alkylacrylat) und hydrolysiertem, vernetztem Poly(acrylnitril) ausgewählt ist.

3. Verfahren nach Anspruch 1, wobei das saure Regenerierungsmittel in Schritt (a) aus einem oder mehreren von 1 bis 15%igen wässrigen Lösungen von Schwefelsäure oder Salzsäure bezogen auf das Gewicht der wässrigen Lösung, ausgewählt ist.

4. Verfahren nach Anspruch 1, wobei Schritt (b) bei einer Harzbetttemperatur von 120 bis 150°C durchgeführt wird.

5. Verfahren nach Anspruch 1, wobei das schwach saure Kationenaustauscherharz in Schritt (b) mit 0,5 bis 0,9 Kilogramm Dampf pro Kilogramm schwach saurem Kationenaustauscherharz in der Wasserstoffform in Kontakt gebracht wird.

6. Verfahren nach Anspruch 1, wobei das schwach saure Kationenaustauscherharz in der Wasserstoffform in Schritt (b) mit Dampf für 2 bis 4 Stunden in Kontakt gebracht wird.

7. Verfahren nach Anspruch 1, welches ferner das Inkontaktbringen des schwach sauren Kationenaustauscherharzes in der Wasserstoffform aus Schritt (b) mit 0,4 bis 5 Gramm, pro Kilogramm schwach saurem Kationenaustauscherharz in Wasserstoffform, eines antimikrobiellen Mittels ausgewählt aus einem oder mehreren aus der Gruppe der Peroxide, der (C₂-C₃)Alkohole oder der anorganischen Chloridsalze, umfasst.

8. Verfahren nach Anspruch 7, wobei das antimikrobielle Mittel aus einem oder mehreren von Wasserstoffperoxid, Peressigsäure, Ethanol, Isopropanol, Natriumchlorid oder Kaliumchlorid ausgewählt ist.

9. Verfahren nach Anspruch 1, welches ferner das Inkontaktbringen des schwach sauren Kationenaustauscherharzes in der Wasserstoffform aus Schritt (b) mit 2 bis 5 Bettvolumen Säure aus einem oder mehreren von 0,05 bis 1 normaler wässriger Lösung von Schwefelsäure, Salzsäure oder Phosphorsäure ausgewählt ist und dann Waschen bzw. Spülen des schwachsauren Kationenaustauscherharzes in der Wasserstoffform mit Wasser umfasst.

## Claims

1. Process for purifying weakly acidic cation exchange resins derived either by acid or base hydrolyses of crosslinked polycarboxylate resin precursors, which comprises:
(a) converting a weakly acidic cation exchange resin derived either by acid or base hydrolyses of crosslinked polycarboxylate resin precursors, in which at least about 90% of the carboxylic acid functionality of the weakly acidic cation exchange resin are present in salt form, into a weakly acidic cation exchange resin in hydrogen form by regeneration by means of an acidic regenerating agent, and
(b) contacting the weakly acidic cation exchange resin in hydrogen form with from 0.1 to 0.9 kilogram of steam per kilogram of weakly acidic cation exchange resin in the hydrogen form at a resin bed temperature of from 100 to 180°C and a steam pressure of from 100 to 7000 kPa for a time of at least one hour.

2. Process according to Claim 1, wherein the weakly acidic cation exchange resin is selected from one or more copolymers of crosslinked poly(acrylic acid), crosslinked poly(methacrylic acid), hydrolysed, crosslinked poly((C₁-C₄)alkyl acrylate) and hydrolysed crosslinked poly(acrylonitrile).

3. Process according to Claim 1, wherein the acidic regenerating agent in step (a) is selected from one or more of from 1 to 15% aqueous solutions of sulphuric acid or hydrochloric acid, based on the weight of the aqueous solution.

4. Process according to Claim 1, wherein step (b) is carried out at a resin bed temperature of from 120 to 150°C.

5. Process according to Claim 1, wherein the weakly acidic cation exchange resin is brought into contact with from 0.5 to 0.9 kilogram of steam per kilogram of weakly acidic cation exchange resin in the hydrogen form in step (b).

6. Process according to Claim 1, wherein the weakly acidic cation exchange resin in the hydrogen form is brought into contact with steam for from 2 to 4 hours in step (b).

7. Process according to Claim 1 which further comprises contacting the weakly acidic cationic exchange resin in hydrogen form from step (b) with from 0.4 to 5 gram of an antimicrobial agent selected from one or more of the group of peroxides, (C₂-C₃)-alcohols and inorganic chloride salts per kilogram of weakly acidic cation exchange resin in hydrogen form.

8. Process according to Claim 7, wherein the antimicrobial agent is selected from one or more of hydrogen peroxide, peracetic acid, ethanol, isopropanol, sodium chloride and potassium chloride.

9. Process according to Claim 1 which further comprises contacting the weakly acidic cation exchange resin in the hydrogen form from step (b) with from 2 to 5 bed volumes of acid selected from one or more of from 0.05 to 1 N aqueous solution of sulphuric acid, hydrochloric acid or phosphoric acid, and then washing or rinsing the weakly acidic cation exchange resin in the hydrogen form with water.

## Revendications

1. Procédé pour la purification de résines échangeuses de cations faiblement acides qui sont dérivées par des hydrolyses soit acides soit basiques de précurseurs de résine de polycarboxylate réticulés, comprenant :
(a) la conversion d'une résine échangeuse de cations faiblement acide, qui est dérivée par des hydrolyses soit acides soit basiques de précurseurs de résine de polycarboxylate réticulés, dans laquelle au moins environ 90% de la fonctionnalité acide carboxylique de la résine échangeuse de cations faiblement acide se trouvent sous forme de sel, en une résine échangeuse de cations faiblement acide sous forme hydrogène par régénération avec un agent de régénération acide, et
(b) la mise en contact de la résine échangeuse de cations faiblement acide sous forme hydrogène avec 0,1 à 0,9 kilogramme de vapeur par kilogramme de résine échangeuse de cations faiblement acide sous forme hydrogène à une température du lit de résine de 100 à 180°C et une vapeur sous pression de 100 à 7000 kPa pendant un laps de temps d'au moins une heure.

2. Procédé selon la revendication 1, la résine échangeuse de cations faiblement acide étant choisie parmi un ou plusieurs copolymères de poly(acide acrylique) réticulé, de poly(acide méthacrylique) réticulé, de poly(acrylate de (C₁-C₄)alkyle) hydrolysé, réticulé et de poly(acrylonitrile) hydrolysé, réticulé.

3. Procédé selon la revendication 1, l'agent de régénération acide dans l'étape (a) étant choisi parmi une ou plusieurs des solutions aqueuses à 1 jusqu'à 15% d'acide sulfurique ou d'acide chlorhydrique, par rapport au poids de la solution aqueuse.

4. Procédé selon la revendication 1, l'étape (b) étant réalisée à une température du lit de résine de 120°C à 150°C.

5. Procédé selon la revendication 1, la résine échangeuse de cations faiblement acide dans l'étape (b) étant mise en contact avec 0,5 à 0,9 kilogramme de vapeur par kilogramme de résine échangeuse de cations faiblement acide sous forme hydrogène.

6. Procédé selon la revendication 1, la résine échangeuse de cations faiblement acide sous forme hydrogène dans l'étape (b) étant mise en contact pendant 2 à 4 heures avec de la vapeur.

7. Procédé selon la revendication 1, comprenant en outre la mise en contact de la résine échangeuse de cations faiblement acide sous forme hydrogène de l'étape (b) avec 0,4 à 5 grammes, par kilogramme de résine échangeuse de cations faiblement acide sous forme hydrogène, d'un agent antimicrobien choisi parmi un ou plusieurs du groupe formé par les peroxydes, les (C₂-C₃)alcools ou les sels de chlorure inorganiques.

8. Procédé selon la revendication 7, l'agent antimicrobien étant choisi parmi un ou plusieurs du groupe formé par le peroxyde d'hydrogène, l'acide peracétique, l'éthanol, l'isopropanol, le chlorure de sodium ou le chlorure de potassium.

9. Procédé selon la revendication 1, comprenant en outre la mise en contact de la résine échangeuse de cations faiblement acide sous forme hydrogène de l'étape (b) avec 2 à 5 volumes de lit d'un acide choisi parmi une ou plusieurs des solutions aqueuses à 0,05 jusqu'à 1 N d'acide sulfurique, d'acide chlorhydrique ou d'acide phosphorique puis le lavage ou le rinçage de la résine échangeuse de cations faiblement acide sous forme hydrogène avec de l'eau.
